# EUROPEAN PATENT APPLICATION

(11) **EP 4 837 792 A1**
(43) Date of publication of application: **11.11.2026**
(21) Application number: 26173435.4
(22) Date of filing: 20.04.2026
(51) Int. Cl.: B60R 25/04, B60R 25/24, H04K 3/00, B60R 25/40

(54) **SYSTEM AND DEVICE FOR CONTROLLING IGNITION INHIBITION**

(30) Priority: 07.05.2025 US 202563801438 P; 17.12.2025 US 202519422906
(71) Applicant: GEOTAB Inc., Oakville, ON L6H 7V2 (CA)
(72) Inventor: Walli, Thomas, Hamilton, L8N 2Z7 (CA); Cockerton, Russell, Wokingham, RG40 5PJ (GB)
(74) Representative: von Zmuda-Trzebiatowski, Margarethe

(57) **Abstract**

The present systems, devices relate to controlling operation of a vehicle, particularly in scenarios where vehicles are shared among multiple users and remote access procedures for accessing a vehicle are implemented. The control of the operation of the vehicle and in particular of the operation of the vehicle motor/engine depends on the result of a user-authentication wherein if the user-authentication has been successful the operation of the vehicle engine/motor is enabled and if the user-authentication has not been successful the operation of the vehicle engine/motor is inhibited. The operation of the vehicle engine/motor refers especially to those scenarios in which a physical vehicle ignition key is required to operate the vehicle ignition.

## Description

The present disclosure generally relates to systems, devices for controlling vehicle and in particular for controlling vehicle engine or motor, and in particular the present disclosure relates to controlling an operation of a vehicle ignition.

### BACKGROUND

In a variety of vehicle management systems, in particular when utilizing telematics-based solutions, it is desirable to provide solutions for vehicle access, operation and management.

A vehicle sharing system is an implementation of a vehicle management system, in which a vehicle or plurality of vehicles are shared between a plurality of users. One example of a vehicle sharing system is a commercial vehicle fleet that includes a plurality of vehicles operated by rotating drivers. Another example is a public car sharing company (e.g., vehicle rental agency) offering a plurality of vehicles, which are rented out to various users. A further example is a corporate or government vehicle sharing with the possibility of vehicles sharing within a company or an organization.

The vehicle sharing system offers various operation methods for remotely assigning the rotating drivers to the available vehicle. The operations imply that, whether for public car sharing, corporate or government vehicle pooling, the fleet managing companies that implement the vehicle sharing system must plan manual and physical ways to coordinate key drop-off and pick-ups.

Offering a more convenient way for managing the handover of a vehicle key in a vehicle sharing system has been recognized as a need to be addressed and solved. There are different approaches to achieve an efficient automation of key management, in particular when utilizing telematics-based solutions.

One approach for achieving key automation is based on a so-called keyless solution, in that an electronic authentication system based on a digitalized lock/unlock technology integrated in a vehicle refrains from using a physical key to unlock a vehicle's door. Consequently, the keyless solution is adapted to enable remote vehicle access. There are various vehicle accessing solutions enabling remote vehicle access. The keyless solution as an example of a remote vehicle access solution that may be mostly applicable in a vehicle sharing system. Nonetheless, the keyless solution may be also used in a one-to-one relationship between a vehicle and a driver, for example by using the electronic authentication system, an operator can track hours when drivers access their vehicles.

Once inside a vehicle the user has predefined operations possibilities that depend especially on the vehicle type or model, for example whether it is a fuel (e.g., diesel, petrol etc.) powered vehicle or an electric vehicle (EV). The predefined vehicle operations comprise the control to start, to drive and to stop the vehicle. For some of the vehicles, a user after unlocking remotely a vehicle's door (e.g., by using the keyless solution based on a digitalized lock/unlock technology), still needs a physical vehicle ignition key (i.e., bladed vehicle ignition key) to operate the vehicle. Therefore, the remote vehicle accessing solutions do not prevent the theft of a vehicle, in particular, when a physical vehicle ignition key is required to operate the vehicle.

### SUMMARY

Accordingly there is a demand to provide a solution which at least partially addresses one or more of the challenges mentioned above. It is a further demand to provide a solution which minimizes the risk of an unauthorized operation of a vehicle while still enabling remote access to the vehicle. In particular, there is a demand to provide a more secure solution for granting access to operate a vehicle engine/motor for vehicles that rely on the use of a physical vehicle ignition key wherein the physical vehicle ignition key is stored separately, e.g. inside the vehicle.

The needs are met by the features of the independent claims. Further aspects are described in the dependent claims.

According to one aspect, the present disclosure relates to a device for controlling operation of a vehicle. The device comprises a jamming antenna installable in a vehicle proximate a transponder-ignition module, wherein the jamming antenna is operable to selectively interfere with the operation of the transponder-ignition module by outputting an ignition jam signal. Further the device comprises a power interface operable to provide input power received from the vehicle and a logic module. The logic module is operable to receive the input power from the power interface and when the input power is received, to selectively output a jam enable signal based on an access signal from a vehicle access control device indicative of whether a user is authenticated, wherein the jam enable signal is responsive to the user not being authenticated. Further the device comprises a jam signal generation circuit communicatively coupled to the logic module and to the jamming antenna. The jam signal generation circuit is operable to output via the jamming antenna the ignition jam signal in response to the jam enable signal wherein the ignition jam signal is operable to jam the operation of the transponder-ignition module at a jamming frequency.

According to an embodiment, presence of the access signal is indicative of the user being authenticated, and the logic module does not output the jam enable signal and absence of the access signal is indicative of the user not being authenticated, and the logic module outputs the jam enable signal.

According to a further embodiment, the access signal includes an indication of the user being authenticated, and the logic module does not output the jam enable signal and the access signal includes an indication of the user not being authenticated, and the logic module outputs the jam enable signal.

According to a further embodiment, the access signal is a voltage signal and a zero Volt signal is indicative of the user not being authenticated and a non-zero Volt signal is indicative of the user being authenticated.

According to a further embodiment, the access signal includes at least one data packet comprising digital coded information whether the user is authenticated.

According to a further embodiment, the jam enable signal is a non-zero Volt jam enable signal.

According to a further embodiment, the jamming frequency corresponds to an operational ignition frequency of the transponder-ignition module.

According to a further embodiment, the logic module further comprises a processing element operable for setting the jamming frequency for the jam signal generation circuit.

According to a further embodiment, the setting of the jamming frequency comprises a selection of a jamming frequency from a plurality of candidate jamming frequencies stored at a memory of the device.

According to a further embodiment, the setting of the jamming frequency is based on an indication of the operational ignition frequency of the transponder-ignition module received from the vehicle access control device.

According to a further embodiment, the processing element is operable to output an indication of the jamming frequency.

According to a further embodiment, the indication of the jamming frequency is a jamming frequency indication signal.

According to a further embodiment, the jam signal generation circuit comprises an oscillator adapted to generate the jam signal at the jamming frequency.

According to a further embodiment, the jam signal generation circuit does not generate the ignition jam signal when there is no power input from the power interface.

According to a further embodiment, the jamming antenna is an approximate coil loop wrapped closely around the transponder-ignition module.

According to a further embodiment, the jamming antenna is an approximate loop made of coil and positioned away from the transponder-ignition module.

According to a further embodiment, the jamming antenna is an approximate loop made of coil and positioned away from the jam signal generation circuit and connectable via a wired connection.

According to another aspect, the present disclosure proposes a system for controlling operation of a vehicle . The system comprises a vehicle access control device positionable at a vehicle. The vehicle access control device comprises an access control communication interface that is operable to receive user-authentication information indicative of a user. Further the vehicle access control device comprises at least one processor and at least one memory comprising instructions when executed by the at least one processor cause the vehicle access control device to perform a user-authentication of a user based on the received user-authentication information and to output by the access control communication interface, an access signal based on a result of the user-authentication, wherein the access signal is indicative of whether the user is authenticated. Further, the system comprises an ignition inhibit device positionable at the vehicle that is communicatively connected to the vehicle access control device. The ignition inhibit device comprises a jamming antenna installable in the vehicle proximate a transponder-ignition module that is operable to selectively interfere with an operation of the transponder-ignition module by outputting an ignition jam signal. The ignition inhibit device comprises further a power interface operable to receive input power from the vehicle and a logic module that is operable to receive the input power from the power interface. Upon reception of the input power, the logic module is operable to selectively output a jam enable signal based on an access signal indicative of whether a user is authenticated, wherein the jam enable signal is responsive to the user not being authenticated. The ignition inhibit device comprises further a jam signal generation circuit communicatively coupled to the logic module and to the jamming antenna. The signal generation circuit is operable to output via the jamming antenna the ignition jam signal in response to the jam enable signal wherein the ignition jam signal is operable to jam the operation of the transponder-ignition module at a jamming frequency.

According to an embodiment, the access control communication interface comprises a wireless communication interface adapted to communicate with a user device which is adapted to provide the user-authentication information.

According to a further embodiment, the access control communication interface comprises a wired communication interface adapted to communicate with a peripheral device which is adapted to receive user input and to provide the user-authentication information.

Aspects of the present disclosure thus provide a more secure solution for granting access to operate a vehicle for those vehicles that rely on the use of a physical vehicle ignition key. In particular, the aspects of the present disclosure enhance a protection of the vehicle from a potential theft by adding an additional level of validation whether the user is authorized to operate the vehicle. Thus, the aspects of the present disclosure achieve to minimize the risk of an unauthorized operation of the vehicle while still enabling remote access to the vehicle.

### BRIEF DESCRIPTION OF THE DRAWINGS

Exemplary non-limiting embodiments are described with reference to the accompanying drawings in which:
Figure 1 is a schematic block diagram of various components interacting with an example telematic system according to an embodiment of the present disclosure.
Figure 2 is a schematic block diagram of an example telematics system interacting with an example telematics device and an example vehicle, according to an embodiment of the present disclosure.
Figure 3 is a schematic block diagram of an ignition-inhibit system for controlling operation of a vehicle engine/motor.
Figure 4 is a schematic block diagram of an example for a system for user-authentication.
Figure 5 is a schematic block diagram of an embodiment of a transponder-ignition module.
Figures 6A, 6B, 6C are schematic block diagrams of exemplary implementations of a jamming antenna.
Figure 7 is a combined flowchart and signal flow diagram of an embodiment for operations and communications of the ignition-inhibit system.

### DETAILED DESCRIPTION

The aspects, scenarios, features and advantages of the present disclosure will be described more fully through the following illustrative and non-limiting detailed description of embodiments with references to the accompanying figures. It is to be understood that the aspects and features may be embodied in many different forms and the features of the embodiments described and explained hereinafter may be combined with each other in other embodiments or may be considered in isolation and should not be construed as limiting. Features from one embodiment may be assumed to be present or used in another embodiment. Other devices, systems, methods and features will become apparent to one skilled in the art upon examination of the following detailed description and the accompanying figures.

According to the present disclosure, a more secure controlling of operation of a vehicle is proposed, in particular for the scenarios which implement remote procedures for a remote access to a vehicle while still requiring a physical vehicle ignition key to operate the vehicle. To achieve this, it is proposed to control the operation of a vehicle ignition depending on the result of a user-authentication wherein if the user-authentication has been successful the vehicle ignition operation is enabled and if the user-authentication has not been successful the vehicle ignition operation is inhibited. More specifically, the present disclosure proposes an ignition inhibit device that inhibits the operation of a vehicle ignition when the user of the vehicle is not authorized to operate the vehicle by using the ignition key. Conversely, the vehicle ignition is enabled when the user of the vehicle is authorized to operate the vehicle by using the ignition key. Especially, the present disclosure proposes to interfere the key-authentication that is carried out between a key transponder and the vehicle ignition in case of an absence of user-authentication. As will be appreciated, the inhibition of the ignition should be activated when the ignition inhibit device receives input power and should last until the input power is provided. Thus, the present disclosure enhances the vehicle theft protection by conditioning vehicle access and operation on successful user authentication.

Hence, the present disclosure refers especially to the scenarios in which a physical vehicle ignition key is needed to operate the vehicle engine and in which the physical vehicle ignition key is stored in the vehicle. In the context of the present disclosure, the term "ignition key" refers to a physical vehicle ignition key, and in particular to a bladed vehicle ignition key. It is to be noted that the term "ignition" is used traditionally for fuel-powered (e.g., diesel, petrol etc.) engine. However, as used herein, the term "ignition" also encompasses electric vehicles, where activating the ignition refers to activating the vehicle's electrical system - i.e., inserting a bladed key connects the high-voltage vehicle's electrical system to the vehicle. Furthermore, the term "vehicle engine" is used in the context of the present disclosure as a generic term covering both a fuel-powered engine and a vehicle's electrical system.

Furthermore, throughout this disclosure, "to access a vehicle" refers to entering a vehicle that involves unlocking the vehicle's door and entering the vehicle. The term "operation of a vehicle" refers to operating a vehicle, such as starting, driving and stopping the vehicle. In case of internal combustion engine (ICE) vehicles, "operation of a vehicle" refers to operating a vehicle engine by means of a vehicle ignition. In case of electric vehicles, "operation of a vehicle" refers to operating a vehicle motor by means of a vehicle ignition as defined above (i.e. by activating the vehicle's electrical system). Hence, the term "controlling operation of a vehicle ignition" refers to enabling or inhibiting the operation of the vehicle ignition. Consequently "controlling operation of a vehicle" refers to enabling or inhibiting the operation of the vehicle engine/motor.

The present disclosure may be applied in a vehicle management system, which utilizes a telematics system, in which the hereafter illustrated examples and embodiments may be implemented.

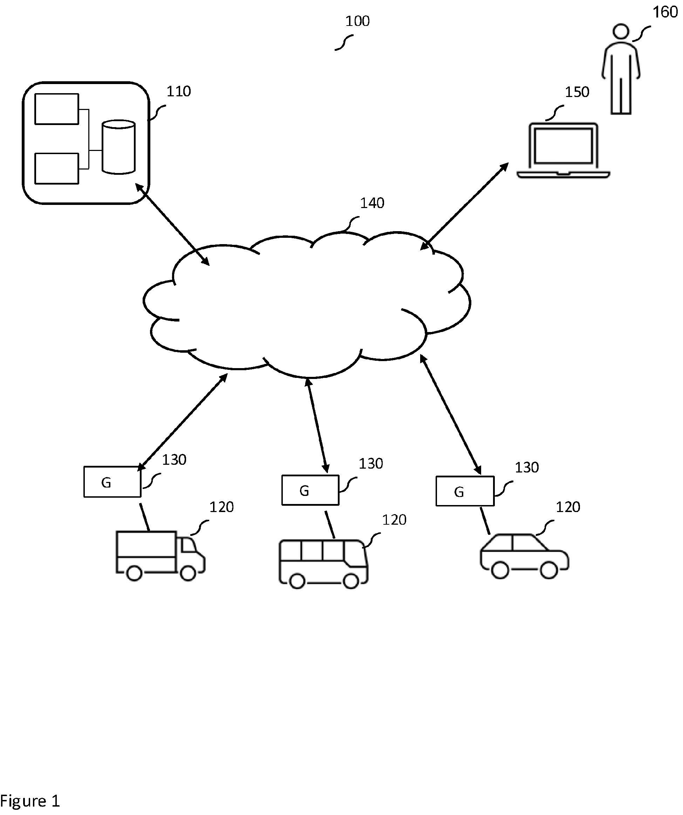

Referring now to Figure 1, there is shown an example of a telematics system 100 for managing a plurality of vehicles 120, each vehicle 120 equipped with a telematics device 130. The asset management system 110 can be remotely located from the telematics devices 130 and the vehicles 120. Although only three vehicles 120 having three telematics devices 130 are shown in Figure 1, it should be appreciated that there can be any number of vehicles 120 and telematics devices 130.

The vehicles 120 may include e.g. any machines for transporting goods or people or vehicles for performing tasks (e.g., construction vehicles) etc. The vehicles 120 can include motor vehicles or engine vehicles, such as, but not limited to, motorcycles, cars, trucks, and/or buses. In some examples the vehicles may use an internal combustion engine (ICE) that can run on petrol, diesel and/or alternative fuel. In other examples the vehicle can be an electric vehicle (EV) or a hybrid vehicle. In some cases, the vehicles 120 may include other kinds of vehicles, such as, watercraft (e.g., ships, boats), aircraft (e.g., airplanes, helicopters), and/or spacecraft. Each vehicle 120 can be equipped with a telematics device 130.

In operation, the telematics devices 130 when interacting with a vehicle 120 may gather various telematics data related to the operation of the vehicle and transmits the telematics data to the asset management system 110 over the communication network 140.

The telematics device 130 is an electronic device which can be a standalone device that is removably installed in the vehicle 120, such as, but not limited to, a vehicle tracking device. Alternatively, the telematics device 130 can be integrated or embedded components in the vehicle 120. As described herein, the telematics device 130 may collect various telematics data and share the telematics data with the fleet management system 110. The telematics data may include any information, parameters, attributes, characteristics, and/or features associated with the vehicles 120. For example, the telematics data may include, but is not limited to, location data, speed data, acceleration data, engine data, brake data, transmission data, fluid data (e.g., oil, coolant, and/or washer fluid), energy data (e.g., battery and/or fuel level), odometer data, vehicle identifying data, error/diagnostic data, tire pressure data, seatbelt data, and/or airbag data. In the case of a vehicle sharing system, the telematics data may be extended and combined with additional data such as user data to provide additional indications such as a user-authentication to verify whether a user is authorized to use a vehicle.

In operation, the asset management system 110 is adapted to provide an operation for the management of the assets, such as vehicles. Said operation may include receiving various type of telematics data that may be used to manage various procedures, such as, user-authentication for using a vehicle, vehicle reservation, asset utilization, fuel management, user compliance etc., which in turn may improve productivity, efficiency, safety and/or sustainability of the vehicles 120. The asset management system 110 may be implemented using any suitable computer platform, that may be based on one or more computers or one or more computer servers. The computer servers may be arranged centralized or distributed across a wide geographical area. In some implementations, the asset management system 110 may be implemented as a dedicated physical server or it may be implemented using a cloud computing platform based on one or more virtualized entities that may be hosted by one or more hosts.

A vehicle sharing system may include various platforms, such as a vehicle reservation platform for managing shared vehicle reservations, a vehicle management platform for managing a fleet of shared vehicles, a vehicle authentication platform for authenticating users' rights to access a vehicle etc. The various platforms may be managed by one asset operator operating an asset management system 110, or it may be managed by different asset operators (e.g., by a fleet owner and/or by the asset data management operator) operating an asset management system 110.

The exemplary computing device 150 (i.e. there may be a plurality of computing devices 150) is arranged to provide access to the asset management system 110 for the operator 160 (e.g., an asset operator). The operator 160 may use the computing device 150 to access or retrieve various telematics data collected and/or processed by the asset management system 110 to manage and track the vehicles 120. As will be appreciated, the computing device 150 may be any suitable computing device. For example, the computing device 150 may be any type of computers such as, but not limited to, personal computers, portable computers, wearable computers, workstations, desktops, laptops, smartphones, tablets, smartwatches, personal digital assistants (PDAs), mobile devices, and the like. The computing device 150 may be remotely located from the asset management system 110, telematic devices 130, and vehicles 120.

The communication network 140 represents any exemplary suitable communication network that is capable to provide a communication between communicating entities. The communication network 140 that may comprise one or more interconnected networks may be wireless, wired, or a combination thereof. For example, the communication network 140 may include, but is not limited to, Wi-Fi^{™} networks, Ethernet networks, Bluetooth^{™} networks, Near-Field Communication (NFC) networks, radio networks, cellular networks, and/or satellite networks. The networks building the communication network 140 may be private, public, or a combination thereof. For example, the communication network 140 may include, but is not limited to, LANs (Local Area Networks), WANs (Wide Area Networks), and/or the Internet.

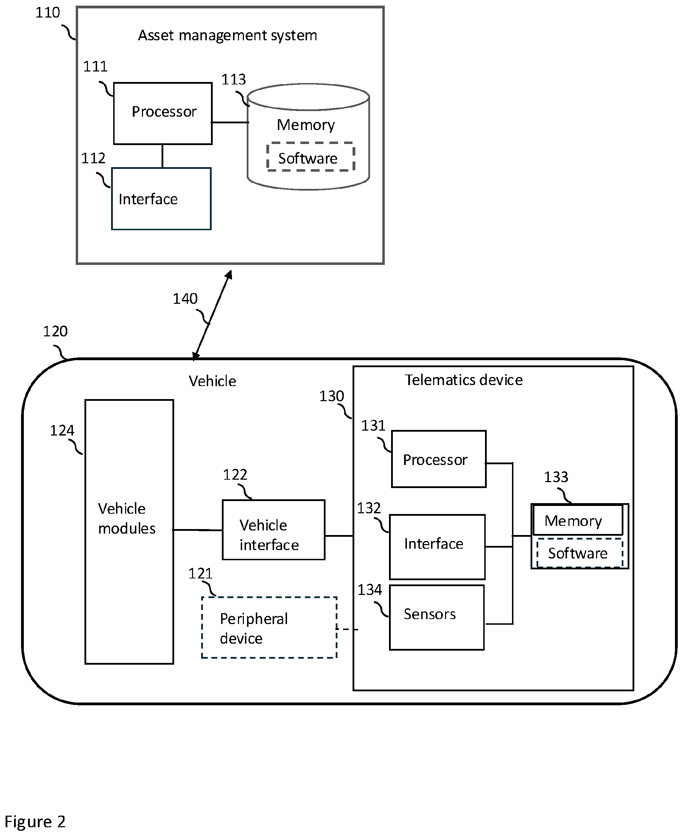

Referring now to Figure 2, the arrangements of asset management system 110, telematics device 130, and vehicle 120 are explained in more detail. In the illustrated example, the asset management system 110 is in communication with a telematics device 130 that is installed in a vehicle 120.

As illustrated, the telematics device 130 includes a processor 131 which may be arranged as a processor circuit, a memory 133 which may have any form of a memory module, such as datastore, data storage etc., an interface 132 and a sensor 134. The processor 131, the memory 133, the communication interface 132 and the sensors 134 may be connected appropriately by one or more internal bus systems.

Throughout this disclosure, for the sake of simplicity, the terms, "the processor", "the memory", and "the interface" are referred to in singular form. It should be appreciated that this is without any limitation as to the complexity of their implementation.

The processor 131 is adapted to operate the telematics device 130 by executing instructions of the software stored on the memory 133 to implement various methods described herein. For example, the processor 131 may process various telematics data obtained from vehicle components 124 and/or sensor 134. The processor 131 may be arranged as a processor circuit and may be implemented in any suitable and preferable way, such as a microprocessor, Central Processing Unit (CPU), Graphics Processing Unit (GPU), Application-Specific Integrated Circuits (ASICS), a Field-Programmable Gate Arrays (FPGAs) etc.

The communication interface 132 is adapted to send and receive corresponding output and input information. In one scenario, the communication interface 132 may be implemented to receive, collect telematics data from one or more of the sensors 134, peripheral device 121 and/or vehicle modules 124. In another scenario, the communication interface 132 may be a communication interface capable of providing connectivity to the asset management system 110 to send the collected data using the communication network 140. The communication interface 132 may be implemented in any suitable way using an appropriate modem. In one implementation, the communication interface 132 may be a wired interface. For example, the communication interface 132 may include various physical connectors, ports, or terminals, such as, but not limited to, USB (universal serial bus), Ethernet, Thunderbolt, Firewire, SATA (serial advanced technology attachment), PCI (peripheral component interconnect), HDMI (high-definition multimedia interface), and/or DisplayPort. In other implementations the communication interface may comprise one or more wireless interface components to connect to wireless networks, such as, but not limited to, Wi-Fi^{™}, Bluetooth^{™}, NFC, cellular, and/or satellite.

The memory 133 is adapted to store data received from various sources, such as sensor 134, vehicle modules 124, peripheral device 121 or data processed by the processor 131. Further, the memory 133 may comprise software or program code containing instructions that when executed by the processor 131, the instructions cause the telematics device 130 to carry out operations and methods described herein. Also, it is to be understood that the memory 133 may include further software or program code for implementing the functionality of the telematics device (e.g., firmware). The memory 133 may be implemented in any suitable way, such as a Random-Access Memory (RAM), a Read-Only-Memory (ROM), flash memory, hard disc drives, optical disc drives, memory cards etc.

Further, the telematics device 130 may include one or more sensors 134 that comprises any suitable sensing interfaces or sensing devices adapted to detect and/or measure events and/or changes in the environment. The sensors 134 may be for example location sensors, velocity sensors, acceleration sensors, orientation sensors, vibration sensors, proximity sensors, temperature sensors, humidity sensors, pressure sensors, optical sensors, and/or audio sensors.

As illustrated, the telematics device 130 may interact with the vehicle 120 that comprises vehicle modules 124, vehicle interface 122 and one or more input/output (I/O) expansion devices, so called peripheral device 121.

The peripheral device 121 is arranged as an input/processing/output module that extends the possibilities of monitoring and collecting additional telematics data or to extend the functionalities of the telematics device 130. In some examples the peripheral device 121 may be a keyless device that is arranged to enable keyless vehicle access, for example by having an integrated vehicle key. In other examples the peripheral device 121 may provide user-authentication functionality configured to validate user grants for operating a vehicle. One or more peripheral device 121 may be installed in the vehicle 120 and connected to the telematics device 130 accordingly. In some implementations, multiple peripheral devices 121 may be connected in the form of a daisy chain and coupled to the telematics device 130. In yet another example, one or more peripheral device 121 may be installed outside of a vehicle 120 and connected accordingly (e.g., a peripheral device 121 carrying out a user-authentication). The arrangement of a peripheral device 121 may vary in complexity depending on the purpose thereof. In other implementations, the peripheral device 121 may be arranged as an on-board device (OBD).

Further as illustrated, the vehicle 120 may include one or more vehicle modules 124. The vehicle modules 124 may include various devices for operation and control of the vehicle 120, such as mechanical modules to lock and unlock a vehicle 120, vehicle ignition, Electronic Control Unit (ECUs), power supply, engine, motor, steering, braking, doors, etc.

The telematics device 130 may gather various telematics data from the vehicle modules 124 via one or more vehicle interfaces 122 connected to its communication interface 132. The vehicle interface 122 may be arranged in any suitable way. For example, the vehicle interface 122 may be on-board diagnostics (OBD-II) ports connecting a Controller Area Network (CAN) bus. In some cases, the peripheral device 121 may be connected to the vehicle interface 122 via a wire harness.

The asset management system 110 as shown includes components such a processor 111, a memory 113, and an interface 112. The processor 111 is arranged to control the operation of the asset management system 110. For example, the processor 111 may process various telematics data collected by the asset management system 110 and stored in the memory 113. The interface 112 is adapted to enable communication between the asset management system 110 and other devices such as the telematics device 130 or other systems or platforms. The components are illustrated only exemplary, and their suitable implementation depends on how the asset management system is arranged (e.g., distributed, centralized, virtualized etc.) as indicated above.

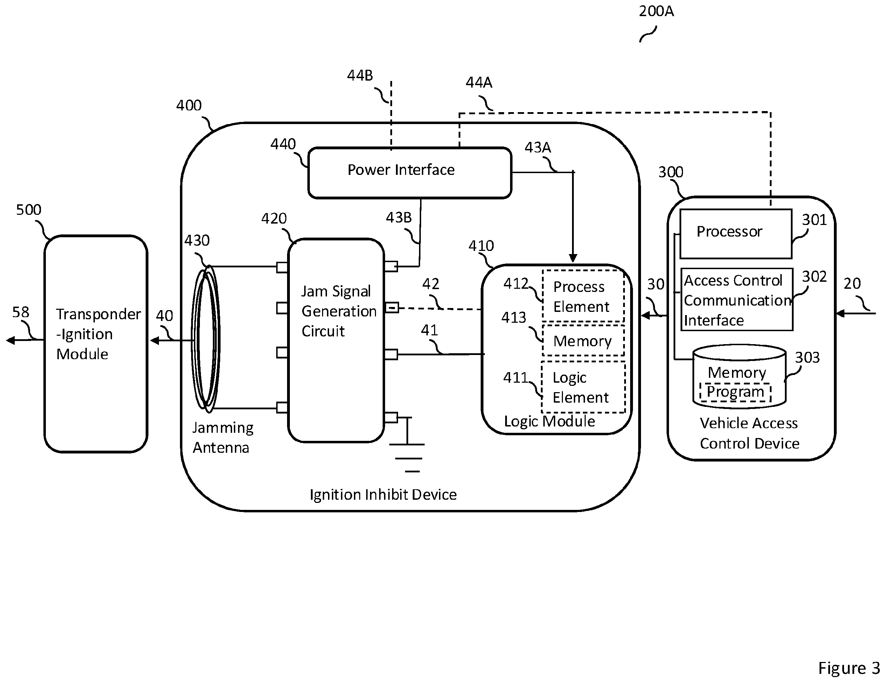

Referring now to Figure 3, a high-level structure of an ignition-inhibit system 200A is illustrated. In the shown example, the ignition-inhibit system 200A comprises a vehicle access control device 300, an ignition inhibit device 400 and a transponder-ignition module 500.

According to the present disclosure, the ignition inhibit device 400 is adapted to prevent activation of the vehicle ignition by jamming the operation of the transponder-ignition module 500 in case user-authentication as performed by the vehicle access control device 300 has not been successful. Thus, the vehicle access control device 300 is adapted to verify the authentication of the user to approve or disapprove access to a vehicle. The ignition inhibit device 400 is arranged to interact with the vehicle access control device 300 to evaluate the result of user-authentication, and with the transponder-ignition module 500 to jam its operation in case of an unsuccessful user-authentication and when receiving power input. In the context of the present disclosure, the operation of the transponder-ignition module 500 comprises performing key-authentication as it will be described in more detail further below.

In the following the components of the ignition-inhibit system 200A are described in more detail.

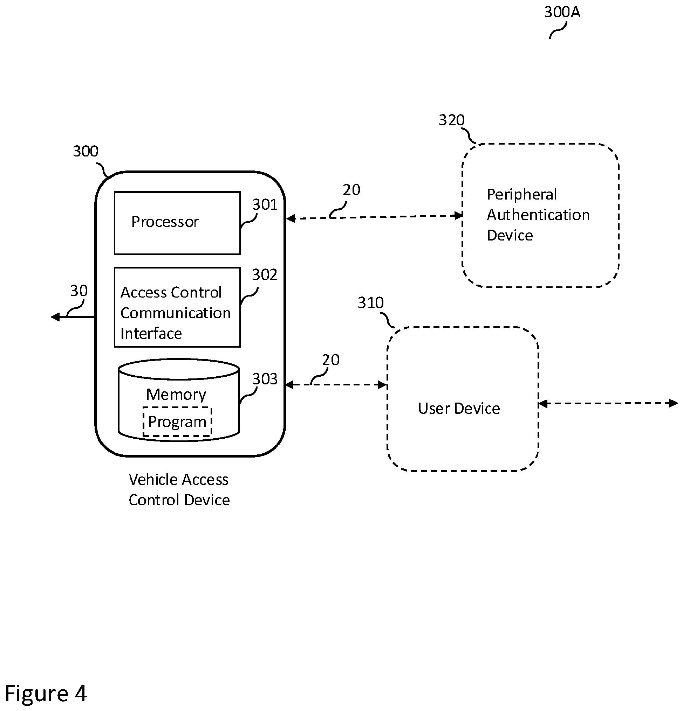

Referring now to Figure 4, the vehicle access control device 300 as a component of a user-authentication system 300A for performing a user-authentication is shown. In the illustrated example, the vehicle access control device 300 is optional connectable to user device 310 and/or peripheral authentication device 320.

The functionality of the vehicle access control device 300 may be implemented in the telematics device 130 or it may be distributed between the telematics device 130 and an appropriate peripheral device 121, like for example a peripheral device 121 offering a keyless solution as described above with reference to Figure 2.

As it should be appreciated there are different known techniques for implementing user-authentication. In the following some possible options are described exemplary without any limitation and without excluding other suitable and known alternatives.

In the context of the present disclosure, the user-authentication is indicative of verifying user permission to access a vehicle. The verification of user permission is based on any credentials that are capable to identify a user or user's device uniquely. As non-limiting examples, the credentials may include name, passwords, authentication key, biometric data, user device identifier, e.g. SIM, user identification barcode or any other suitable credentials that uniquely identifies the user. The credentials may be administrated in an appropriate manner, e.g. the credentials may be stored in a memory of the adequate device, such as user device, appropriate peripheral device, authentication platform for authenticating users' rights, or the asset management system 110 as described above with reference to Figure 1 and Figure 2.

As illustrated in Figure 4, the vehicle access control device 300 includes a processor 301, a memory 303 and an access control communication interfaces 302. Some possible examples of the implementation of the memory 303, the processor 301 and the access control communication interface 302 are described above in relation to the telematic devices 130, respectively in relation to the memory 133, the processor 131, the interface 132 and may apply herein accordingly. The processor 301 is capable to process the user-authentication. The memory 303 may store any information that may be required to verify the authentication of a user. The access control communication interface 302 is adapted to communicate with any suitable user-authentication module that is arranged to be involved in the user-authentication. Examples of a user-authentication module may be a user device 310 or a peripheral authentication device 320.

According to an implementation, the access control communication interface 302 may comprise a wireless communication interface which is adapted to communicate with a user device 310 which is adapted to provide the user-authentication information 20. The user-authentication information 20 refers to any set of information associated with the result of user-authentication.

The user device 310 may be any suitable device, such as a mobile phone, a smartphone, a personal digital assistant, a computer system, a laptop etc., that is capable to provide the user-authentication information 20 by verifying user access credentials administrated in the user device 310 (e.g., using name, passwords, biometric data etc.). In one example the provision of the user-authentication information 20 may include contacting an authentication server (not shown) for performing user-authentication, wherein the user-authentication at the authentication server may be performed in any known and suitable manner e.g. by requesting to verify user access credentials with the credentials administrated in the authentication server (e.g., name, passwords, authentication key etc.). Furthermore, the user-authentication may be performed either while accessing a vehicle or by downloading the user access credentials prior to accessing the vehicle. In some examples, the functionality of the authentication server may be implemented in the vehicle authentication platform or in the asset management system 110 as described above.

The result of the performed user-authentication is provided in the user-authentication information 20. In some implementations, the provision of the user-authentication information 20 comprises an establishment of a wireless connection between the user device 310 and the access control communication interface 302 of the vehicle access control device 300. The wireless connection may be any suitable wireless connection as described above in relation to the telematics device, such as, but not limited to, a cellular connection or a short-range communication such as e.g. Bluetooth^{™}, Wifi etc.. The advantage of implementing a user device (e.g., user device 310) for performing user-authentication is that the user device may be pre-configured in a way that the necessary user-authentication information may be provided on demand by the involved user-authentication server using wireless connection.

According to another implementation, the access control communication interface 302 may comprise a communication interface which is adapted to communicate with a peripheral authentication device 320 that is adapted to receive user input and to provide the user-authentication information 20.

A peripheral authentication device 320 may be connected to interface 302 of the vehicle access control device 300 using a wired connection. In this implementation, the peripheral authentication device 320 may be an appropriate device capable of processing user input. As non-limiting examples, the peripheral authentication device 320 may be a scanner or a reader, e.g., biometric reader or an NFC reader. Depending on the use case, the corresponding scanner or reader may be installed in the vehicle or proximate to the vehicle and connected in an appropriate manner to the vehicle access control device 300. The user input may be biometric data of the user or a Radio-Frequency Identification (RFID) or Near Field Communication (NFC) card contained in an RFID or NFC user device (not shown) that is arranged to interact with the peripheral authentication device 320 (e.g., biometric reader or an NFC reader) when brought within proximity. As non-limiting examples, the biometric data may be selected from the group of face data, fingerprint data, voice data or eye data, etc.

In some implementations, the user input is provided by tapping an RFID or NFC user device against an RFID or NFC reader-i.e., the peripheral authentication device 320-installed in or associated with the vehicle 120. The vehicle 120 may include a peripheral authentication device 320 such as a keypad, touchpad, or biometric scanner, with which the user can interact to provide the user input. In some examples, the peripheral authentication device 320 (e.g., RFC reader) may be mounted on the vehicle's windshield. Based on the user input, the peripheral authentication device 320 performs user authentication and outputs the user-authentication information 20.

The user-authentication information 20 may be provided to the vehicle access control device 300 via a wired connection. The wired connection may be any suitable wired connection as described above with reference to Figure 2 in relation to the telematics device, such as, but not limited to, USB (universal serial bus), Ethernet, SATA (serial advanced technology attachment), PCI (peripheral component interconnect) etc.. The advantage of implementing a peripheral authentication device 320 for performing user-authentication that uses wired connection to communicate with the vehicle access control device 300 is that the user-authentication may be performed even in the case when wireless communication is not feasible (e.g., lack of wireless connection) or not permitted.

As indicated above, the user-authentication information refers to any set of information associated with the result of user-authentication. Hence, the user-authentication information 20 may comprise any set of data indicating the user's permission to operate the vehicle. In some examples, the user authentication information may include permission to unlock and open a vehicle door (e.g., for cleaning only). In other examples, the user authentication information may include permission to activate the vehicle's engine/motor (e.g., for driving). Thus, the user authentication information specifies the scope in which the user is authorized to access the vehicle, including in one scenario unlocking and opening the vehicle doors to access the ignition key.

Hence, upon receiving the user-authentication information 20, the processor 301 of the vehicle access control device 300 determines whether the user is authorized to access the vehicle. In some examples, the received user-authentication information 20 may be compared with any suitable credentials stored in the memory 303 of the vehicle access control device 300 to determine whether the user has been successfully authenticated or whether the user has not been successfully authenticated to allow or to deny access to the vehicle. In other examples, the user authentication information 20 may be in a format that allows the processor 301 to recognize whether the user has been successfully authenticated or whether the user has not been successfully authenticated.

Depending on the result of the user-authentication a corresponding format of an access signal 30 is provided. The format of the access signal 30 may depend for example on a vehicle model. In the context of the present disclosure, the purpose of the access signal 30 is to indicate whether the user has been authenticated for accessing the ignition key.

In the light of the above, the user-authentication as described above allows an implementation of the electronic authentication system for the keyless solution that provides a convenient handling of remote access to a vehicle. However, once inside a vehicle, for some vehicles an ignition key is required to operate the vehicle ignition and consequently to operate the vehicle engine/motor.

In the context of the present disclosure, the ignition key may be stored in any suitable manner within the vehicle so that the user can access it once inside the vehicle. In some examples, the ignition key can be stored in a glove compartment. In other examples, the ignition key may be stored in a physical key-box that may be arranged as a peripheral device (e.g., peripheral device 121 as described with reference to Figure 2). In some implementations, the key-box may be electronically lockable to control the access to the ignition key. In one scenario, the user-authentication procedure may be extended to include additionally the ability to open an electronically lockable key-box. In some examples, the vehicle access control device 300 may be included in the key-box; alternatively, the key-box may be arranged separate from the vehicle access control device 300. In either case, successful user-authentication unlocks not only the vehicle, but also the key-box, providing the user access to the ignition key. Such an implementation adds an additional layer of security, as a non-authorized thief would need to breach both the vehicle and the key-box to access the ignition key.

Once the ignition key is available, various systems exist for unlocking the vehicle ignition using the ignition key. One implementation is based on a vehicle key transponder technology. This technology utilizes a key transponder integrated in the ignition key to perform a key-authentication so that if the ignition key is authenticated, the vehicle ignition is activated. Herein, the term "key-authentication" refers to an authentication of the key transponder by interacting with the vehicle ignition.

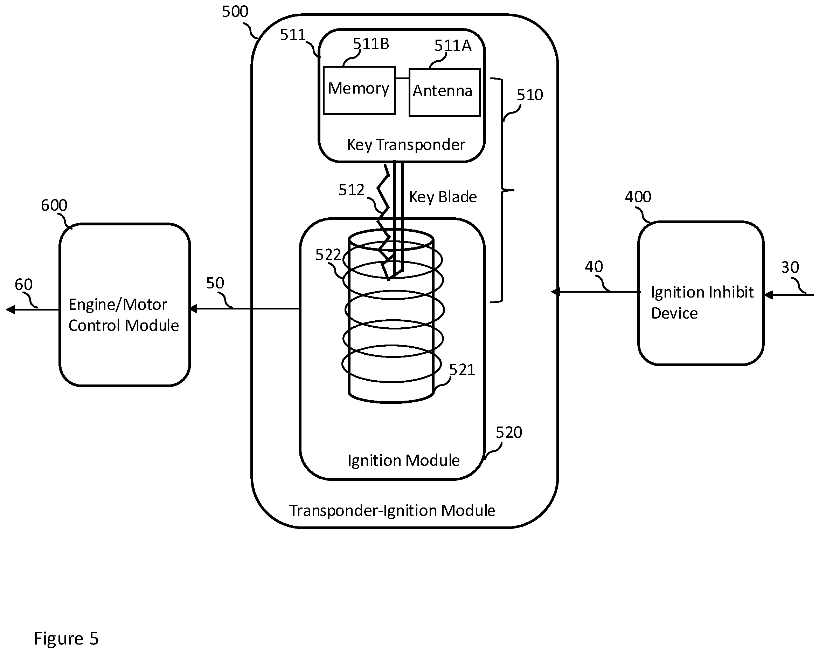

Referring now to Figure 5, a transponder-ignition module 500 is illustrated that is communicatively connected to the ignition inhibit device 400 and to an engine/motor control module 600.

The transponder-ignition module 500 comprises an ignition key 510 operable with an ignition module 520. The ignition key 510 may comprise a key-head and a key blade 512. The ignition module 520 may comprise among other components an ignition cylinder 521 adapted to receive the key blade 512, and an ignition antenna 522 located proximate to the ignition cylinder 521. The ignition module 520 may be implemented as a vehicle module 124 as described above with reference to Figure 2. The ignition cylinder 521 is designed in a manner to receive the key blade 512. For example, the ignition cylinder 521 may comprise inside wafers that when aligned with the grooves of the key blade 512 enable the ignition cylinder 521 to turn the key blade 512. This interaction of the key blade 512 with the ignition module 520 causes turning on power supply of the vehicle 120. In particular, the interaction of the key blade 512 with the ignition antenna 522 leads to generating a first radio frequency.

The ignition key 510 as illustrated comprises further a key transponder 511. The key transponder 511 is an electronic device (e.g., a transponder chip such as an RFID microchip). The key transponder 511 comprises a memory 511B and a transponder antenna 511A. As a non-limiting example, the key transponder 511 may be embedded in a key-head of a vehicle key. The key transponder 511 is designed to comprise a unique identification key code such as a unique digital serial number, that is stored in the memory 511B. The unique identification key code is arranged to identify the ignition key in a unique manner and is utilized in the key-authentication procedure. The transponder antenna 511A is adapted to send the unique identification key code to the ignition antenna 522 by means of a second radio frequency.

The ignition antenna 522 is adapted to communicate with the transponder antenna 511A and may be arranged in any suitable manner proximate the ignition cylinder 521. In one example the ignition antenna 522 is formed as an antenna ring, for example a coil ring, that may be located around the ignition cylinder 521. In particular, the ignition antenna 522 is designed to generate the first radio frequency when a key blade 512 is turned in the ignition cylinder 521 and to send the first radio frequency to the transponder antenna 511A and to receive the second radio frequency carrying the unique identification key code from the transponder antenna 511A. Thus, the transponder-ignition module 500 is adapted to carry out the key-authentication. The result of the key-authentication 50 is sent from the transponder-ignition module 500 to the engine/motor control module 600 that performs the verification of the key-authentication and based on the outcome, the ignition and consequently the operation of the vehicle engine/motor is either enabled or inhibited.

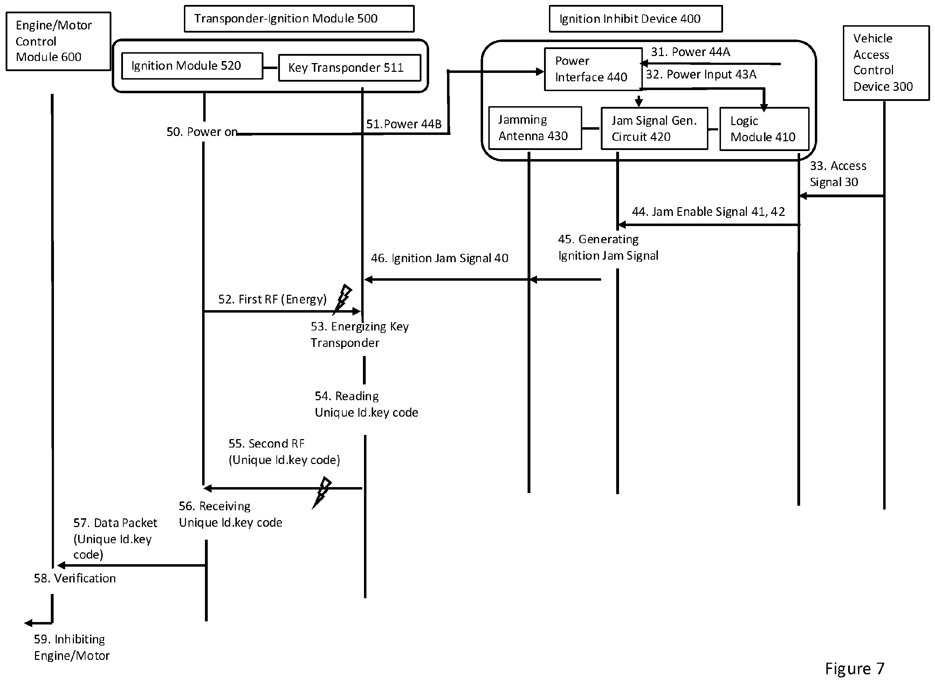

In the following the operation of the transponder-ignition module 500 is described in more detail with reference to Figure 7 that refers to Figure 5. Figure 7 illustrates a combined flowchart and signal flow diagram of operations and communications of the ignition-inhibit system 200A.

At 50, the key blade 512 is inserted into the ignition cylinder 521 of the ignition module 520 and rotated causing vehicle to be powered on and thereby to provide at 51 power 44B to the power interface 440. At 52, the vehicle power causes the ignition antenna 522 to send a burst of energy by means of a first radio frequency, First RF (Energy), to the key transponder 511. As a non-limiting example, the first radio frequency may be in the range of 100-150 kHz. At 53, the first radio frequency is received at the transponder antenna 511A of the key transponder 511 that causes the key transponder 511 (e.g., a microchip) to energize. At 54, due to the energizing, the key transponder 511 reads a unique identification key code stored in the memory 511B of the key transponder 511. At 55, the key transponder 511 transmits the unique identification key code via the transponder antenna 511A using a second radio frequency, Second RF (unique Id.key code), to the ignition antenna 522. As a non-limiting example, the second radio frequency may be in the same range as the first radio frequency, such as the range of 100-150 kHz. At 56, the ignition antenna 522 receives the second radio frequency comprising the unique identification key code and digitalizes the received second radio frequency into a data packet 50. At 57, the data packet comprising the unique identification key code is sent to the engine/motor control module 600 for verification. At 58, the engine/motor control module 600 verifies whether the received unique identification key code matches one of the key codes stored in the memory of the engine/motor control module 600. At 59, if the codes match, the operation of the vehicle engine/motor is enabled, and the vehicle engine/motor may be activated; if the codes do not match, the operation of the vehicle engine/motor is inhibited. In other words, the engine/motor control module 600 is adapted to verify the key-authentication carried out at the transponder-ignition module 500.

Thus, the operation of the transponder-ignition module 500 includes the key-authentication procedure that comprises using the first radio frequency and the second radio frequency to receive a unique identification key code of the ignition key for verification thereof. Generally, the key-authentication of the transponder-ignition module and the verification of the key-authentication at the engine/motor control module reduce the risk of vehicle theft by preventing the operation of the vehicle engine/motor when the ignition key has not been authenticated. Throughout this disclosure, the term "operational ignition frequency" refers to one or both of the radio frequencies described above. Within the context of the present disclosure, it is proposed to jam the operational ignition frequency - i.e., one or both of those frequencies - using an ignition jam signal at a jamming frequency generated by the ignition inhibit device (as it will be described below) so that the key-authentication performed by the transponder-ignition module is inferred and consequently the key-authentication at the engine/motor control module is not verified.

Referring now back to Figure 3, there is illustrated an ignition inhibit device 400 that comprises a logic module 410 that communicates with a jam signal generation circuit 420, a power interface 440 and a jamming antenna 430. An embodiment of the functionality of the ignition inhibit device 400, when operating, is explained with reference to Figure 7.

The power interface 440 is adapted to receive power from an appropriate power source of a vehicle. In one example, the power interface 440 draws the power 44B directly from a connection to the power supply of the vehicle. In another example, the power interface 440 receives power 44A from the vehicle access control device 300 which in turn draws power from the vehicle. The selection of the source of power for the power interface 440 may depend for example on the vehicle model and thus an appropriate implementation may be selected as suitable. In some implementations, when the ignition inhibit device 400 is connected for receiving the access signal 30 with the vehicle access control 300, it may be beneficial to use said connection for the power provision. In other implementations, the power can be supplied directly from the power supply of the vehicle when the ignition of the vehicle is activated (i.e. at ON position or START position). In either case, the power interface 440 is adapted to provide power input 43A to the logic module 410 and power input 43B to the jam signal generation circuit 420 for enabling their operations.

The logic module 410 is adapted to output a jam enable signal 41 indicative of user not being authenticated, when the logic module 410 receives the power input 43A and when the access signal 30 from the logic module 410 is indicative of the user not being authenticated.

The format of the access signal 30 may be implemented in any appropriate manner. In some implementations, the presence of the access signal 30 is indicative of the user being authenticated and in that case the logic module 410 does not output the jam enable signal 41 even though the power input 43A is received to prevent the jamming of the operational ignition frequency. Conversely, an absence of the access signal 30 is indicative of the user not being authenticated and in that case the logic module 410 outputs the jam enable signal 41 if the power input 43A is received to trigger the jamming of the operational ignition frequency.

In some examples, the access signal 30 is a voltage signal, in which a zero Volt signal is indicative of the user not being authenticated and a non-zero Volt signal (e.g., 5 Volt) is indicative of the user being authenticated. In other examples, the implementation may be reversed, i.e., a non-zero Volt (e.g., 5 Volt) signal is indicative of the user being not authenticated and a zero Volt signal may be indicative of the user being authenticated. The selection of the implementation may depend, for example, on the vehicle model. In the following, for the sake of simplicity, the absence of the access signal 30 is interpreted as information that the user is not authenticated. However, the reversed implementation should not be considered as excluded. In conjunction with an implementation where the access signal 30 is a voltage signal, the access signal 30 may be referred to as a binary access signal.

In some implementations, the logic module 410 includes a logic element 411 configured to output a binary jam enable signal 41 responsive to the user not being authenticated. For example, the logic element 411 may be a logical gate that receives the power input 43A and converts the binary access signal 30 into a binary jam enable signal 41. In one scenario, the jam enable signal 41 is a non-zero Volt jam enable signal. Using binary signals in this manner has the benefit that the implementation is less complex.

According to some implementations, the access signal 30 may include an indication of the user being authenticated and in this case the logic module 410 does not output a jam enable signal 41 even if the power input 43A is received. In other implementations, the access signal 30 may include an indication of the user not being authenticated and in this case the logic module 410 outputs a jam enable signal 41 if the power input 43A is received.

In some implementations, the indication of whether a user is authenticated may be implemented as a digital coded information. For example, the access signal 30 may include at least one data packet comprising the digital coded information whether the user is authenticated. The at least one data packet may be sent via a serial interface module, which may be an implementation of the access control communication interface 302. In some cases, the vehicle access control device 300 may omit outputting the access signal 30 including the indication of the user not being authenticated. The absence of the access signal 30 may for example occur when a user breaks into a vehicle without attempting to authenticate. In case, a user breaks into a vehicle after performing an unsuccessful user-authentication, an access signal 30 may be outputted including explicit indication of the user being not authenticated successfully. Using an explicit indication of whether the user has been authenticated has the advantage of being more flexible in terms of having more data capacity to send more data (e.g., to add indication of the operational ignition frequency).

According to some implementations, the jamming frequency may correspond to an operational ignition frequency of the transponder-ignition module. According to other implementations, the logic module 410 may include a processing element 412 that is operable to set jamming frequency for the jam signal generation circuit 420, wherein the jamming frequency corresponds to an operational ignition frequency of the transponder-ignition module 500.

In some examples, the jamming frequency may correspond to the first radio frequency of the operation of the transponder-ignition module as explained above. In other examples, the jamming frequency may correspond to the second radio frequency of the operation of the transponder-ignition module. In one scenario, the first and the second radio frequencies may be identical. The operational ignition frequency of the transponder-ignition module may depend for example on the vehicle model, the ignition module and/or the geographical region (e.g., due to different local frequency regulations). It should be noted that the jamming frequency should correspond to the frequency of the operation of the transponder-ignition module to achieve the jamming of the frequency of the operation of the transponder-ignition module. For example, if the operational ignition frequency is at 125kHz, the jamming frequency should also be at 125kHz. Especially, it is proposed to utilize a radio-frequency range (e.g., range of 100-150 kHz) to provide flexibility in selecting an appropriate frequency.

According to some implementations, the setting of the jamming frequency comprises a selection of a jamming frequency from a plurality of candidate jamming frequencies stored in a memory of the device (e.g., ignition inhibit device 400). In one example, the processing element 412 may have knowledge of the ignition model and/or vehicle model and the corresponding operational ignition frequency (e.g., information is stored in the memory 413) and thus, the processing element 412 may be capable to select a jamming frequency suitable to jam the operational ignition frequency.

According to other implementations, the setting of the jamming frequency is based on an indication of the operational ignition frequency of the transponder-ignition module 500 which is received from the vehicle access control device 300. In some examples, the vehicle access control device 300 may be capable of recognizing the vehicle model for example when installing the vehicle access control device 300 in the vehicle and of setting the suitable ignition frequency matching the vehicle model. In other examples, the operation ignition frequency of the transponder-ignition module 500 may be selected in advance in respect to the vehicle model and stored in the vehicle access control device 300. It is to be understood that there are various ways of recognizing operational ignition frequency.

According to an implementation, after setting the ignition frequency, the vehicle access control device 300 may be configured to send an indication of the operational ignition frequency to the logic module 410. For example, as described above, the indication may be sent as the at least one data packet to the processing element 412 using the connection for outputting the access signal 30 which may be for example a serial bus connection connectable to a serial interface module.

In one example, the indication of the operational ignition frequency may be provided to the processing element 412 as one-time information and stored in the memory 413. In another example, the indication of the operational ignition frequency is sent to the processing element 412 together with the indication of whether a user is authenticated via the access signal 30. In some implementations, the processing element 412 is implemented as a microcontroller configured to receive the access signal 30, including an indication whether a user has been authenticated and to store the operational ignition frequency in the memory 413. In some cases, the processing element 412 may be configured for setting the jamming frequency by selecting an operational ignition frequency as the jamming frequency. Further the processing element 412 may be configured to output the jam enable signal 41, 42 when receiving the power input 43B if a user has not been authenticated. The format of the jam enable signal 41, 42 may depend on the preferred implementation.

In some implementations, after setting the jamming frequency, the processing element 412 may output an indication of the jamming frequency to the jam signal generation circuit 420 which applies the indicated jamming frequency to jam the operation of the transponder ignition module 500. In some examples, the indication of the jamming frequency is a separate jamming frequency indication signal 42 sent in addition to the jam enable signal 41 instructing the jam signal generation circuit 420 to generate and output the ignition jam signal 40 at the jamming frequency as indicated in the jamming frequency indication signal 42. Alternatively, the indication of the jamming frequency may be included in the jam enable signal 41, omitting a separate jamming frequency indication signal 42. Thus, the jamming frequency indication signal 42 may be combined with the jam enable signal 41 or it may be sent in addition to the jam enable signal 41, as appropriate for a given application.

In some implementations, in which the jam enable signal 41 merely indicates that the jam signal generation circuit 420 should be activated, the jam enable signal 41 may be a non-zero Volt jam enable signal signifying that the jam signal generation circuit 420 is to be activated (i.e., jamming is to be performed) and that the ignition is to be disabled. Conversely, a jam enable signal 41 of zero Volt may be interpreted as an indication that the jam signal generation circuit 420 is not to be activated (i.e., jamming is not to be performed) and that the ignition is to be enabled. In some implementations, the jamming frequency may be a pre-defined frequency that may be hardware configured in the jam signal generation circuit 420 so that the ignition jam signal 40 is generated and outputted at the pre-defined frequency upon reception of the jam enable signal 41. In this case, the jam enable signal 41 may be implemented as a non-zero Volt jam enable signal.

According to the present disclosure, the jam signal generation circuit 420 comprises an oscillator (not shown) adapted to generate and output the ignition jam signal 40 at the jamming frequency. Herein, the oscillator is capable to receive the power input 43B and the jam enable signal 41. Upon reception of the power input 43B and the jam enable signal 41, the oscillator generates power for the jamming antenna 430 at the corresponding jamming frequency. Depending on the implementation, the oscillator may generate power for the jamming antenna 430 either at the pre-defined jamming frequency or the oscillator may be a multi-frequency capable and thus, it may be programmable to support the generation of the power for the jamming antenna 430 at the jamming frequency as received in the jamming frequency indication signal 42.

According to the present disclosure, the ignition inhibit device 400 comprises a jamming antenna 430. The jamming antenna 430 is operable to selectively interfere with an operation of the transponder-ignition module 500. The selectivity depends on the status of the user-authentication at vehicle access control device 300, in other words the jamming antenna 430 is activated when the jam signal generation circuit 420 is activated upon receipt of a jam enable signal 41 which is outputted by the logic module 410 when the user has not been authenticated even though the logic module 410 receives the power input 43B. The position of the jamming antenna 430 is to be selected proximate the transponder-ignition module 500 so that the jamming antenna 430 is suitable to inhibit the operation of the transponder-ignition module 500. In particular, the position and form of the jamming antenna 430 may depend on the vehicle model.

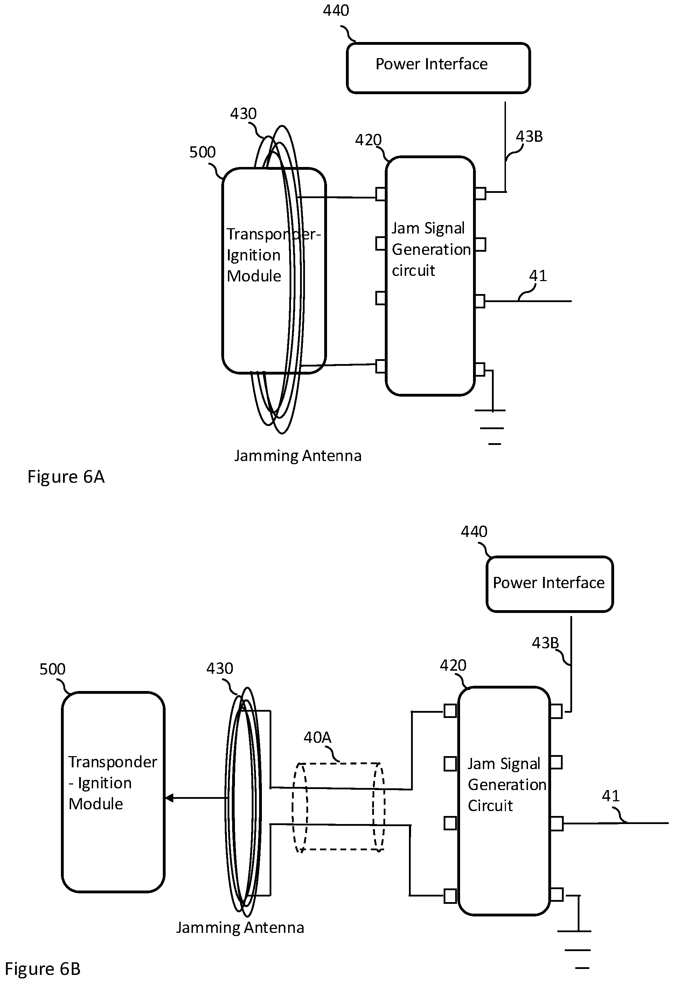

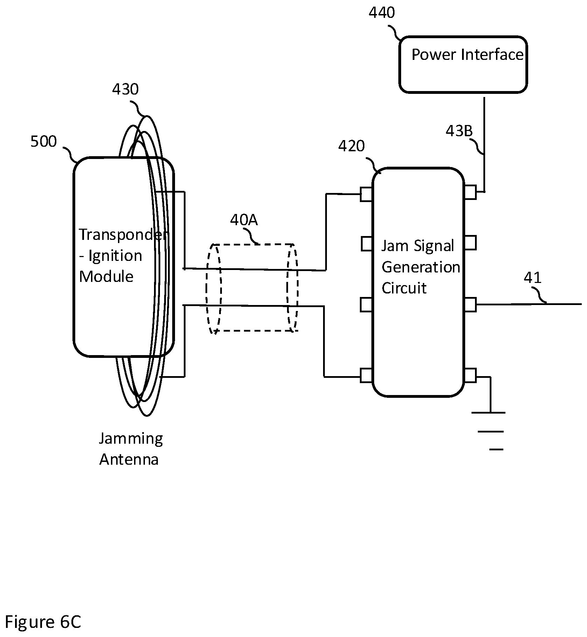

Referring now to Figure 6A, Figure 6B, Figure 6C there is shown the jamming antenna 430 connected to the jam signal generation circuit 420 and the jamming antenna 430 interacting with the transponder-ignition module 500. The jam signal generation circuit 420 is adapted to receive the power input 43B from the power interface 440 and to receive the jam enable signal 41.

In some implementations, according to Figure 6A, the jamming antenna 430 may be an approximate coil loop wrapped closely around the transponder-ignition module 500. The benefit of installing a jamming antenna 430 as close as possible (e.g., by wrapping) to the jam signal generation circuit 420 is that the power of the ignition jam signal 40 may be kept low.

In some implementations, according to Figure 6B the jamming antenna 430 may be installed proximate to the transponder-ignition module 500. This may be beneficial for those vehicle models in which wrapping the jamming antenna 430 around the jam signal generation circuit 420 is not feasible or difficult to implement.

In other implementations, as illustrated in Figure 6B and Figure 6C the jamming antenna 430 may be an approximate loop made of coil and positioned away from the jam signal generation circuit 420 but still proximate to the transponder-ignition module 500. In some cases, the jamming antenna 430 may be connected to the jam signal generation circuit 420 via a wired connection 40A providing greater flexibility for installing the ignition inhibit device 400 in a vehicle. In other implementations, as illustrated in Figure 5 and Figure 6A, the jamming antenna 430 and the jam signal generation circuit 420 may be positioned in close proximity to each other without the need for a wired connection 40A.

According to some implementations, it is proposed that the jam signal generation circuit 420 should not generate the ignition jam signal 40 when there is no power input 43B from the power interface 440. Generally, it is to be noted, that when there is no power input 43A and/or 43B from the power interface 440, it is proposed to stop the operation of the jam signal generation circuit 420. That means, when logic module 410 and/or jam signal generation circuit 420 are unpowered, the ignition jam signal 40 is not generated.

Thus, the ignition inhibit device 400 is adapted to inhibit the operation of the transponder-ignition module 500 in case of an absence of user-authentication at vehicle access control device 300. More specifically, the inhibiting of the operation of the transponder-ignition module 500 is achieved by jamming the transmission of the operational ignition frequency which can be at least one of the first or second radio frequencies or both as described above with reference to Figure 5 and Figure 7.

In the following an example of the functionality of the ignition inhibit device 400, when operating and inferring the transponder-ignition module 500 is explained with reference to Figure 7 in combination with Figure 3 in more detail.

Alternatively at 51 or at 31, power 44B or 44A is received at the power interface 440. At 32, power input 43A is received at the logic module 410. At 44, when the access signal 30, at 33, indicates that the user has not been authenticated successfully and the power input 43B is received, a jam enable signal 41 is outputted. As described above, in some implementations, the logic module 410 may be extended to evaluate the jamming frequency. In this case, at 44, the jam enable signal 41 may be extended by an indication of the jamming frequency that is to be applied for the ignition jam signal 40, and/or an additional jamming frequency indication signal 42 may be outputted. At 45, the jam signal generation circuit 420 generates and outputs the ignition jam signal 40 at the appropriate jamming frequency. At 46, the ignition jam signal 40 at the jamming frequency is used to jam the operation of the transponder-ignition module 500. Herein, the ignition jam signal 40 is capable to jam the operational ignition frequency, that may be the first radio frequency at 53 or the second radio frequency at 56. At 57, as a result of jamming the operational ignition frequency, the ignition module 520 receives noise or falsified information instead of an unique key identifier code (or which obfuscates or mask the unique key identifier code) with the consequence that at 58, the verification of the provided noise or falsified information leads to an error so that at 59, the operation of the vehicle engine/motor is inhibited.

It is to be noted that the jamming of the transponder ignition module should start before or simultaneously with the key-authentication. In one scenario, when the vehicle power is on (e.g., in the ON position), the power is supplied to the ignition inhibit device causing the jamming to commence. Simultaneously the transponder is awakened, and the first radio frequency is generated while the jamming is on-going. This implementation ensures that the jamming inhibits the first radio frequency.

In particular, it is to be understood that the logic module outputs the jam enable signal when two conditions are fulfilled, namely when the power input is received and when the access signal indicates that the user is not authenticated. Thus, if the power input is not received, no jam enable signal is outputted and likewise if the access signal indicates that the user is authenticated, also no jam enable signal is outputted. In other words, the jamming of the transponder ignition module is performed when the user is not authenticated and as long as the ignition key is turned to a power-on position (e.g., to ON position or to Start position). Once the ignition key is turned back to the power-off position, the power is no longer provided and the jamming stops. The generation of the ignition jam signal consumes vehicle power and therefore it is advantageous to stop jamming of the transponder ignition module whenever power is not supplied.

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

While the present invention has been described with respect to the non-limiting embodiments, it is to be understood that the invention is not limited to the disclosed embodiments. Persons skilled in the art understand that the disclosed invention is intended to cover various modifications and equivalent arrangements included within the scope of the appended claims. Thus, the present invention should not be limited by any of the described embodiments.

## Claims

1. A device (400) for controlling operation of a vehicle (120) comprising:
a jamming antenna (430) installable in a vehicle (120) proximate a transponder-ignition module (500) operable to selectively interfere with operation of the transponder-ignition module by outputting an ignition jam signal (40);
a power interface (440) operable to provide input power (43A) received from the vehicle (120);
a logic module (410) operable to:
receive the input power (43A) from the power interface (440); and
when the input power (43A) is received, selectively output a jam enable signal (41,42) based on an access signal (30) from a vehicle access control device (300) indicative of whether a user is authenticated, wherein the jam enable signal (41,42) is responsive to the user not being authenticated;
a jam signal generation circuit (420) communicatively coupled to the logic module (410) and to the jamming antenna (430), the jam signal generation circuit (420) operable to:
output, via the jamming antenna (430), the ignition jam signal (40) in response to the jam enable signal (41,42) responsive to the user not being authenticated, wherein the ignition jam signal (40) is operable to jam operation of the transponder-ignition module (500) at a jamming frequency.

2. The device according to claim 1 wherein:
presence of the access signal (30) is indicative of the user being authenticated, and the logic module (410) does not output the jam enable signal (41,42); and
absence of the access signal (30) is indicative of the user not being authenticated, and the logic module (410) outputs the jam enable signal (41,42).

3. The device according to claim 1 wherein:
the access signal (30) includes an indication of the user being authenticated, and the logic module (410) does not output the jam enable signal (41,42); and
the access signal (30) includes an indication of the user not being authenticated, and the logic module (410) outputs the jam enable signal (41,42).

4. The device according to claim 2 wherein the access signal (30) is a voltage signal, a zero Volt access signal is indicative of the user not being authenticated and a non-zero Volt access signal is indicative of the user being authenticated.

5. The device according to claim 3 wherein the access signal (30) includes at least one data packet comprising digital coded information whether the user is authenticated.

6. The device according to one of the claims 1 to 3 wherein the jam enable signal (41,42) is a non-zero Volt jam enable signal.

7. The device according to claim 1 wherein the jamming frequency corresponds to an operational ignition frequency of the transponder-ignition module (500).

8. The device according to one of the claims 1 to 7 wherein the logic module (410) further comprises a processing element (412) operable to set the jamming frequency for the jam signal generation circuit (420).

9. The device according to claim 8 wherein the setting of the jamming frequency comprises a selection of a jamming frequency from a plurality of candidate jamming frequencies stored at a non-transitory processor-readable storage medium (413) of the device.

10. The device according to one of the claims 8 to 10, wherein the processing element (412) is operable to output an indication of the jamming frequency.

11. The device according to claim 1 wherein the jamming antenna (430) is an approximate loop made of coil and wrapped closely around the transponder-ignition module (500) or is positioned away from transponder-ignition module (500).

12. The device according to claim 1 wherein the jamming antenna (430) is an approximate loop made of coil and positioned away from the jam signal generation circuit (420) and connectable via a wired connection (40A).

13. A system (200A) for controlling operation of a vehicle (120) comprising:
a vehicle access control device (300) positionable at the vehicle (120), the vehicle access control device (300) comprising:
an access control communication interface (302) operable to receive user-authentication information (20) indicative of a user;
at least one processor (301);
at least one memory (303) comprising instructions when executed by the at least one processor (301) cause the vehicle access control device (300) to:
perform a user-authentication of a user based on the received user-authentication information (20); and
output an access signal (30), by the access control communication interface (302), based on a result of the user-authentication, wherein the access signal (30) is indicative of whether the user is authenticated;
an ignition inhibit device (400) positionable at the vehicle (120), the ignition inhibit device (400) comprising:
a jamming antenna (430) installable in the vehicle (120) proximate a transponder-ignition module (500) operable to selectively interfere with an operation of the transponder-ignition module (500) by outputting an ignition jam signal (40);
a power interface (440) operable to provide input power (43A) received from the vehicle (120);
a logic module (410) operable to:
receive the input power (43A) from the power interface (440); and
when the input power (43A) is received, selectively output a jam enable signal (41,42) based on an access signal (30) indicative of whether a user is authenticated, wherein the jam enable signal (41,42) is responsive to the user not being authenticated;
a jam signal generation circuit (420) communicatively coupled to the logic module (410) and to the jamming antenna (430), the jam signal generation circuit (420) operable to:
output, via the jamming antenna (430), the ignition jam signal (40) in response to the jam enable signal (41,42) responsive to the user not being authenticated, wherein the ignition jam signal (40) is operable to jam operation of the transponder-ignition module (500) at a jamming frequency.

14. The system of claim 19, wherein the access control communication interface (302) comprises a wireless communication interface adapted to communicate with a user device (310) which is adapted to provide the user-authentication information (20).

15. The system of claim 19, wherein the access control communication interface (302) comprises a wired communication interface adapted to communicate with a peripheral device (320) which is adapted to receive user input and to provide the user-authentication information (20).
